# EUROPÄISCHE PATENTANMELDUNG

(11) **EP 1 561 876 A1**
(43) Veröffentlichungstag der Anmeldung: **10.08.2005**
(21) Anmeldenummer: 05100650.0
(22) Anmeldetag: 01.02.2005
(51) Int. Cl.: E04B 9/18

(54) **Anbindevorrichtung**

(30) Priorität: 09.02.2004 DE 102004006202
(71) Anmelder: HILTI Aktiengesellschaft, 9494 Schaan (LI)
(72) Erfinder: Hoffmann, Armin, 86899, Landsberg (DE)
(74) Vertreter: Wildi, Roland

(57) **Zusammenfassung**

Eine Anbindevorrichtung (11) für Abspannmittel an einem Stahlträger (1) umfasst ein Lagerelement (12) und drei U-förmig ausgebildete und jeweils über Lagermittel (15) schwenkbar an dem Lagerelement (12) angeordnete Anbindeelemente (21). Die Anbindeelemente (21) weisen je eine Aufnahme (25) für ein Festlegemittel der anzuordnenden Abspannmittel auf. Die Aufnahme (25) ist als ein schlitzförmiger, im Wesentlichen über das ganze U-förmig ausgebildete Anbindeelement (21) verlaufender Durchbruch ausgebildet.

## Beschreibung

### Technisches Gebiet

Die Erfindung betrifft eine Anbindevorrichtung für Abspannmittel an einem Träger einer Tragkonstruktion mit einem Lagerelement und einem Anbindelement. Das Anbindeelement weist einen ersten Schenkel und einen zweiten Schenkel sowie ein, den ersten Schenkel und den zweiten Schenkel verbindenden Verbindungsabschnitt auf. In den freien Endbereichen des ersten Schenkels und des zweiten Schenkels sind Durchbrüche für eine schwenkbare Anordnung des Anbindeelementes an dem Lagerelement über ein Lagerungsmittel vorgesehen. Weiter weist das Anbindelement eine Aufnahme für ein Festlegemittel des Abspannmittels auf.

### Stand der Technik

In Stahl- und Stahlbetonhallen insbesondere der Industrie werden oftmals Abhängekonstruktionen an den Trägern der Tragkonstruktion angeordnet, beispielsweise zur Schaffung einer flexiblen Anbindemöglichkeit an die benötigte und oft umfangreiche Haustechnik und Prozessmedien, wie beispielsweise Strom, Druckluft und Wasser. Solche Abhängekonstruktionen sind z. B. Rasterdecken, welche mittels Abspannmitteln an der Tragkonstruktion des Gebäudes, beispielsweise an den Dachträgern der Stahl- oder Stahlbetonhalle, in einem bestimmten Abstand zu dieser angehängt werden. Die Abspannmittel für die Abhängekonstruktion müssen infolge der grossen Trägerabstände senkrecht und schräg von den Trägern zum Raster der abgehängten Ebene geführt werden.

Grosse Innenhöhen, weite Trägerabstände und geringe Lastaufnahme an der Dachhaut führen teils zu aufwändigen und teuren Lösungen zur Befestigung der Abspannmittel z. B. an den das Dach tragenden, horizontalen Trägern, wobei sich diese Lösungen oftmals bei einem späteren Umbau der Halle nicht wieder verwenden lassen. Die Montage solcher Abhängekonstruktionen erfolgt zudem oftmals in einer grossen Höhe über dem Boden der Halle, so dass zur Reduktion des Montageaufwands und der Unfallgefahr für das Montagepersonal die verwendeten Anbindevorrichtungen einfach händelbar sein müssen.

Aus der DE 32 24 986 A1 ist eine Anbindevorrichtung mit Gewindestangen zum Abspannen einer abgehängten Decke bekannt, bei der ein Anbindeelement an der Decke befestigt wird, in welchem ein hierin drehbeweglich gelagertes Gelenkteil angeordnet ist. Das Anbindeelement weist eine Aufnahme für einen Zapfen des Gelenkteils auf. Das Gelenkteil weist weiter eine Aufnahme für eine schräg ausgerichtete Gewindestange auf. Durch die Aufnahme wird die Gewindestange hindurchführt und mittels einer Mutter an dem Gelenkteil gesichert oder die Aufnahme ist mit einem Innengewinde versehen, in welches die Gewindestange in Eingriff bringbar ist.

Nachteilig an der bekannten Lösung ist, dass diese Anbindevorrichtung aufwändig in der Montage ist. Zudem ist die Ausmittlung der Abspannelemente mit der bekannten Lösung nur beschränkt möglich. Die Wirkungslinien der in den Abspannmittel wirkenden Kräfte sind bei dieser Anbindevorrichtung versetzt zueinander wirksam, so dass die Anbindevorrichtung zusätzlichen Quer- und Momentbelastungen ausgesetzt ist und daher massiv ausgebildet sein muss.

Aus der DE 199 46 222 C1 ist eine Anbindevorrichtung für eine Rohrschelle, mit Gewindestangen als Abspannmittel, an einer Decke bekannt, die ein Lagerelement und zwei Anbindelemente umfasst. Die Anbindeelemente weisen einen ersten Schenkel und einen zweiten Schenkel sowie einen, den ersten Schenkel und den zweiten Schenkel verbindenden Verbindungsabschnitt auf. In den freien Endbereichen des ersten Schenkels und des zweiten Schenkels sind Durchbrüche für eine verdrehbare Anordnung des Anbindeelementes an dem Lagerelement über eine Bolzen/Mutter-Verbindung vorgesehen. An dem Anbindelement ist ein Langloch zur Aufnahme einer Mutter/Kontermutter-Anordnung an der Gewindestange vorgesehen.

Nachteilig an der bekannten Lösung ist, dass das Anbindeelement nur bedingt schwenkbar mit dem Lagerelement verbunden ist und der durch das Langloch im Anbindeelement definierte zweite Schwenkbereich nur ein geringes Verschwenken des an diesem festgelegten Abspannmittel ermöglicht.

### Darstellung der Erfindung

Aufgabe der Erfindung ist es, eine Anbindevorrichtung zu schaffen, die oben genannten Nachteile zu vermeiden und die flexibel anwendbar ist.

Die Aufgabe ist durch die Merkmale des unabhängigen Anspruchs gelöst. Vorteilhafte Weiterbildungen sind in den Unteransprüchen dargelegt.

Gemäss der Erfindung ist die Aufnahme als ein schlitzförmiger, von dem ersten Schenkel über den Verbindungsabschnitt zu dem zweiten Schenkel verlaufender Durchbruch ausgebildet.

Der schlitzförmige Durchbruch weist beidseitig, parallel zueinander verlaufende Ränder auf und definiert für das mittels des Festlegemittels in dem schlitzförmigen Durchbruch festgelegte Abspannmittel einen Schwenkbereich gegenüber der von dem Lagermittel gebildeten Achse mit einem möglichen Schwenkwinkel im Bereich von 0° bis 180°. Somit ist mit der erfindungsgemässen Anbindevorrichtung das, an dem Anbindeelement festgelegte Abspannmittel in zwei Schwenkfreiheitsgraden verschwenkbar. Mittels der schwenkbaren Verbindung zwischen dem Anbindeelement und dem Lagerelement können beliebige Winkelstellungen des Abspannmittels zu dem Träger an ein und derselben Anbindevorrichtung erzielt werden.

Das Lagermittel für die schwenkbare Festlegung des Anbindeelementes an dem Lagerelement ist beispielsweise eine, mit einer Kontermutter und allenfalls Unterlegscheiben gesicherte Schlosserschraube beziehungsweise ein Gewindebolzen, der durch die Durchbrüche an den Schenkeln des Anbindeelementes und durch eine Durchführöffnung im Lagerelement hindurchführbar. Die Durchführöffnung im Lagerelement und die Durchbrüche an den Schenkeln des Anbindeelementes bilden Lageraugen aus, welche eine Beschichtung oder ein Lagerungselement, wie z. B. ein Kugellager, aufweisen können. Anstelle einer Schlosserschraube kann das Lagermittel als Bolzen, Zapfen oder dergleichen sowie als Vollkörper oder Hohlkörper, ausgebildet sein, die z. B. mit einem Sicherungsstift nach deren Anordnung an der Anbindevorrichtung gesichert werden. In einer Variante dazu ist das Lagermittel als geschlitzte Hülse ausgebildet, welche an den freien Enden der Hülse jeweils einen flanschartigen Rand aufweist und über eine Einschnappverbindung das Anbindeelement schwenkbar an dem Lagerelement festlegt.

Die Anbindevorrichtung wird in einem ersten Montageschritt an dem Träger festgelegt. Anschliessend kann das Abspannmittel an der Aufnahme am Anbindeelement mittels des Festlegemittels festgelegt werden. Das Abspannmittel ist beispielsweise eine Gewindestange, welche neben Zugbelastungen auch beschränkt Druckbelastungen übernehmen kann. Anstelle einer Gewindestange können auch glatte Rundstangen, Bewehrungsstäbe oder Seile beispielsweise aus Stahl als Abspannmittel verwendet werden.

Vorzugsweise verbindet der Verbindungsabschnitt des Anbindeelementes den ersten Schenkel und den zweiten Schenkel bogenförmig. Das in der Aufnahme des Anbindeelementes verschwenkbar festgelegte Abspannmittel kann entlang der bogenförmigen Ausgestaltung des Verbindungsabschnitts des Anbindeelementes geführt werden.

Bevorzugt weist der Verbindungsabschnitt des Anbindeelementes zumindest einen linear verlaufenden Abschnitt auf. Der Verbindungsabschnitt weist beispielsweise eine polygonale Ausgestaltung aus mehreren, aneinandergereihten linearen Abschnitten auf. In einer Variante dazu sind zwischen einem bogenförmigen und den Schenkeln des Anbindeelementes lineare Abschnitte vorgesehen.

Vorteilhafterweise ist das Lagerelement als Trägerabschnitt ausgebildet. Der Trägerabschnitt ist beispielsweise ein Abschnitt einer C-förmigen Montageschiene, an der einander gegenüberliegende Durchführöffnungen zur Anordnung des Lagermittels zur schwenkbaren Festlegung des Anbindeelementes vorgesehen sind. Vorzugsweise sind mehrere Anbindeelemente an dem Trägerabschnitt für die Festlegung mehrerer Abspannmittel an der Anbindevorrichtung vorgesehen, wobei der Trägerabschnitt eine entsprechende Anzahl von Durchführöffnungen aufweist. Alternativ können auch zwei oder mehr Anbindeelemente mit einem Lagermittel in einer Durchführöffnung beziehungsweise einander gegenüberliegende Durchführöffnungen im Trägerabschnitt schwenkbar an diesem festgelegt sein.

In einer Variante dazu weist das Lagerelement beispielsweise ein Anlageteil mit z. B. zwei, senkrecht zu der von dem Anlageteil gebildeten Ebene ausgerichteten Anschlussteilen auf, wobei die Anschlussteile jeweils einander gegenüberliegende Durchführöffnungen zur Durchführung des Lagermittels und der schwenkbaren Festlegung des Anbindeelementes an dem Lagerelement aufweisen. Das Anlageteil des Lagerelementes weist beispielsweise eine Durchführöffnung für ein Befestigungsmittel zur Festlegung des Lagerelementes an dem Träger auf.

Vorzugsweise weist die Anbindevorrichtung zumindest zwei Halteelemente für eine Anbindung des Lagerelementes an dem Träger auf. Damit wird eine Anbindemöglichkeit für das Lagerelement geschaffen, welche mit standardisierten Ausbildungen des Lagerelementes die Festlegung desselben am Träger ermöglicht. Bei einer Umgestaltung der Anbindung oder einer Umnutzung kann das Lagerelement von dem Träger gelöst und wieder verwendet werden.

Bevorzugt weist das Halteelement einen ersten Zwingenabschnitt, einen dem ersten Zwingenabschnitt gegenüberliegend angeordneten zweiten Zwingenabschnitt sowie einen die beiden Zwingenabschnitte verbindenden Verbindungsabschnitt zum Umgreifen eines Trägerrandes auf. Zumindest eine Durchführöffnung für ein Fixiermittel ist an zumindest einem der Zwingenabschnitte vorgesehen. Durch die zwingenartige Ausgestaltung lässt sich das zumindest eine Anbindeelement einfach an einem Träger anordnen, der einen flanschähnlichen Abschnitt aufweist. Die zumindest eine Durchführöffnung für ein Fixiermittel an zumindest einem der Zwingenabschnitte ist vorteilhafterweise mit einem Innengewinde versehen, in welches eine als Fixiermittel dienende Schraube mit einem Aussengewinde in Eingriff bringbar ist. Das Fixiermittel kann als Angreifmittel einen Schraubenkopf oder eine, mit dem Befestigungsmittel festverbundene Flügelmutter aufweisen, welche werkzeuglos von Hand betätigbar ist.

Das Lagerelement, beispielsweise der Trägerabschnitt, liegt zumindest bereichsweise auf einem der Zwingenabschnitte des Halteelementes auf und wird beim Verspannen eines der Fixiermittel an der entsprechenden Aussenseite des Trägers lösbar festgelegt. In einer bevorzugten Ausführungsform weisen beide Zwingenabschnitte jeweils eine Durchführöffnung für jeweils ein Fixiermittel auf, wobei das eine Fixiermittel der Fixierung des Anbindeelementes an dem Träger und das andere Fixiermittel der Fixierung des Lagerelementes dient. Ist das Lagerelement beispielsweise als C-förmiger Montageschienen-Abschnitt ausgebildet, kann als Fixiermittel zur Fixierung des Montageschienen-Abschnitts z. B. eine so genannte Schienenmutter verwendet werden.

Vorteilhafterweise weist der Verbindungsabschnitt des Halteelementes eine Durchführöffnung zum Durchführen des Lagerelementes auf. Das Lagerelement, beispielsweise ein Trägerabschnitt, kann eine bestimmte Längserstreckung aufweisen, welche eine Vielzahl der entsprechenden Erstreckung, beispielsweise der Breite, des Trägers entspricht, an der das Lagerelement zu liegen kommt. Weist der Träger eine kleinere Erstreckung auf, so werden die Halteelemente zum Umgreifen eines Trägerrandes verschoben und in der entsprechenden Position mittels des oder der Fixiermittel am Träger fixiert. An einem Träger mit einer flächigen Aussenkontur ohne einen Trägerrand können die Halteelemente mittels Befestigungsmittel fixiert werden, die in die Aussenkontur des Trägers eindringen, wobei vorteilhafterweise der Verbindungsabschnitt des Halteelementes flächig mit einer Aussenseite des Trägers in Anlage gebracht wird. Bevorzugt weist der Verbindungsabschnitt des Halteelementes eine weitere Durchführöffnung zum Durchführen eines Befestigungsmittels auf, womit das Halteelement direkt an einer Aussenseite eines Trägers befestigt werden kann.

Vorzugsweise ist ein Halteband mit zumindest einem Befestigungsabschnitt zur Festlegung des Lagerelementes und/oder des Halteelementes an dem Träger vorgesehen, wobei der zumindest eine Befestigungsabschnitt zumindest eine Durchführöffnung für ein Befestigungsmittel aufweist. Insbesondere bei Betonträgern, die grosse Spannweiten aufweisen, ist im unteren Bereich des Betonträgers eine dichte Anordnung der Hauptbewehrung vorhanden, so dass eine Festlegung der erfindungsgemässen Anbindevorrichtung in diesem Bereich beispielsweise mittels Dübeln aus statischen Gründen nicht zulässig beziehungsweise nicht erwünscht ist. Das Halteband kann entlang der Trägeraussenkontur verlegt und beispielsweise angeklebt werden. Das Halteband ist an unterschiedlichste Trägeraussenkonturen anpassbar. Das Lagerelement und/oder das zumindest eine Halteelement werden über den einen ersten Befestigungsabschnitt und dem durch die Durchführöffnung, welche optional ein Innengewinde aufweist, hindurchgeführten Befestigungsmittel gehalten. Das Befestigungsmittel ist beispielsweise eine Schraube die in eine Durchführöffnung am Lagerelement und/oder an dem zumindest einen Halteelement eingreift. Das Halteband weist vorteilhafterweise einen zweiten Befestigungsabschnitt auf, der an dem, dem ersten Befestigungsabschnitt gegenüberliegenden Endbereich vorgesehen ist und mehrere Durchführöffnungen für Befestigungsmittel aufweist. Damit lassen sich Dübel ausserhalb der Zugzone und den Bereichen von hohen Bewehrungskonzentrationen des Betonträgers setzen.

Bevorzugt weist das Festlegemittel des Abspannmittels eine Fixieraufnahme zur Anordnung des Abspannmittels und zumindest zwei Hintergreifabschnitte zum Hintergreifen von Rändern des schlitzförmigen Durchbruchs der Aufnahme des Anbindeelementes auf. Die Abspannmittel weisen z. B. in einem Anschlussbereich eine Fixiervorrichtung auf. Sind die Abspannmittel beispielsweise als Gewindestangen, glatte Rundstangen oder Bewehrungsstäbe ausgebildet, weist deren Anschlussbereich z. B. einen Gewindeabschnitt mit einem Aussengewinde auf, wobei das Festlegemittel daran anordnenbare Muttern sind. Nach dem Einführen eines solchen Abspannmittels werden mittels einer an dem Aussengewinde angeordneten Mutter die Hintergreifabschnitte geschaffen. Zur Sicherung des Abspannmittels kann vor dem Einführen eine Kontermutter an dem Gewindeabschnitt vorgesehen sein. Dies ermöglicht zudem die Fixierung des Abspannmittels in der ausgerichteten Position, indem der Verbindungsabschnitt des Anbindeelementes zwischen den Muttern eingeklemmt wird. Bei Seilen als Abspannmittel weist deren Anschlussbereich vorteilhafterweise ebenfalls einen Gewindeabschnitt mit einem Aussengewinde und daran anordnenbare Muttern auf.

Vorzugsweise weist das Festlegemittel des Abspannmittels eine erste Erstreckung, die kleiner als die Breite des Durchbruchs der Aufnahme des Anbindeelementes ist, zum Einführen des Festlegemittels in den Durchbruchs der Aufnahme des Anbindeelementes in einer ersten Stellung und eine, im Wesentlichen senkrecht zur ersten Erstreckung verlaufende zweite Erstreckung auf, die grösser als die Breite des Durchbruchs der Aufnahme des Anbindeelementes ist, zum Hintergreifen der Ränder des schlitzförmigen Durchbruchs der Aufnahme des Anbindeelementes in einer zweiten Stellung. Das Festlegemittel weist eine im Wesentlichen T-förmige Ausgestaltung auf. In der ersten Stellung wird das zuvor an dem Abspannmittel über die Fixieraufnahme an diesem angeordnete Festlegeelement in die Aufnahme an dem Anbindeelement eingeführt und anschliessend durch eine axiale Drehung des Abspannmittels beziehungsweise des Festlegemittels in die Zweite Stellung gebracht, in welcher die Hintergreifabschnitte die Ränder der schlitzförmig ausgebildeten Aufnahme an dem Anbindeelement hintergreifen. Entlang der Aufnahme kann das Festlegemittel und somit das Abspannmittel zusätzlich verschwenkt werden. Ist das Abspannmittel eine Gewindestange oder dergleichen, kann das zuvor an dem Abspannmittel angeordnete Festlegemittel auch aus einer grösseren Distanz zu dem Anbindeelement in dieses eingeführt und abgedreht werden. Damit wird die Montage wesentlich vereinfacht.

Die Anbindevorrichtung und deren Teile sind vorteilhafterweise aus Metall gefertigt, wobei die Herstellung der Teile aus Gussmetall bevorzugt ist. Metall und Gussmetall ermöglichen eine kostengünstige Fertigung der Teile und gewähren gleichzeitig eine lange Gebrauchstauglichkeit. Bei einer Verwendung der Anbindevorrichtung z. B. in chemisch aggressiver Umgebung werden die einzelnen Teile vorzugsweise aus einem korrossionsbeständigen Material hergestellt. Alternativ kann eines der Teile oder sämtliche Teile aus einem geeigneten Kunststoff gefertigt sein, welcher die für die Gebrauchstauglichkeit erforderlichen Eigenschaften aufweist.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die Erfindung wird nachstehend anhand von Ausführungsbeispielen näher erläutert. Es zeigen:
- Fig. 1: Einen Schnitt durch einen Stahlträger mit einer erfindungsgemässen Anbindevorrichtung;
- Fig. 2: einen Ausschnitt der in Fig. 1 gezeigten erfindungsgemässen Anbindevorrichtung im Schnitt;
- Fig. 3: einen Schnitt durch einen Betonträger mit einer erfindungsgemässen Anbindevorrichtung; und
- Fig. 4a,b: das Festlegen eines Festlegemittels eines Abspannmittels an einem Anbindeelement in zwei Montagezuständen.

Grundsätzlich sind in den Figuren gleiche Teile mit den gleichen Bezugszeichen versehen.

### Wege zur Ausführung der Erfindung

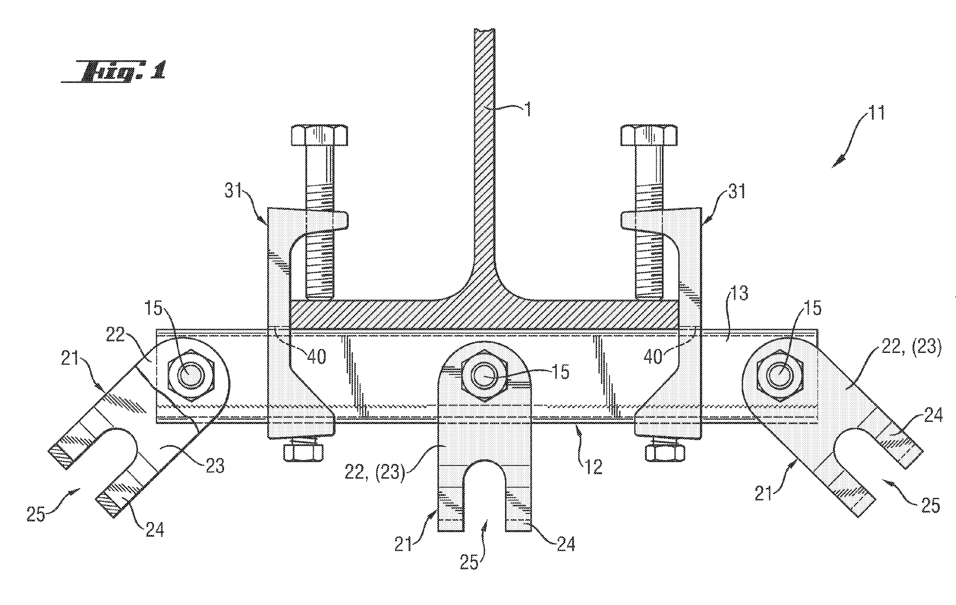

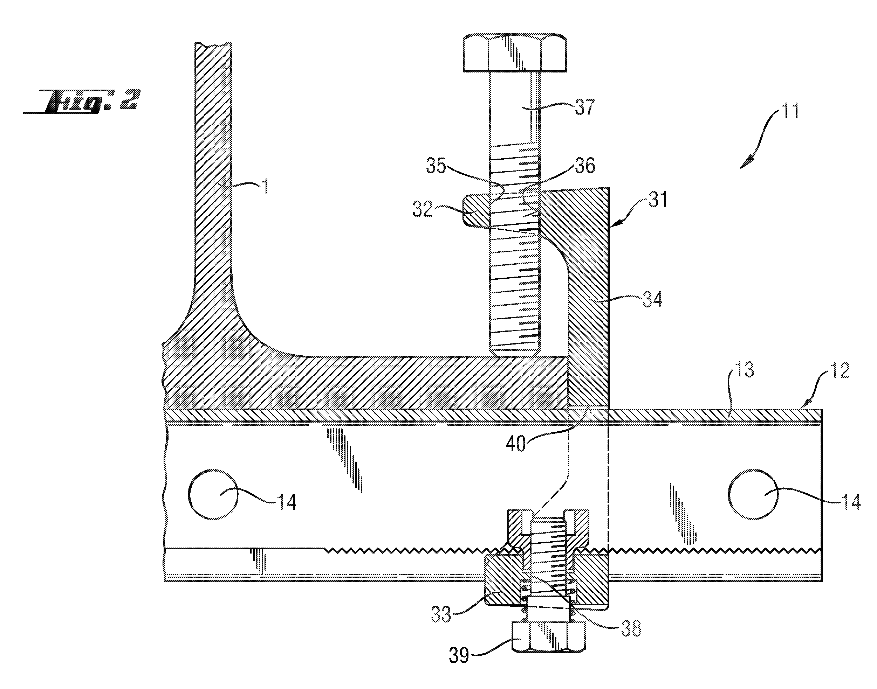

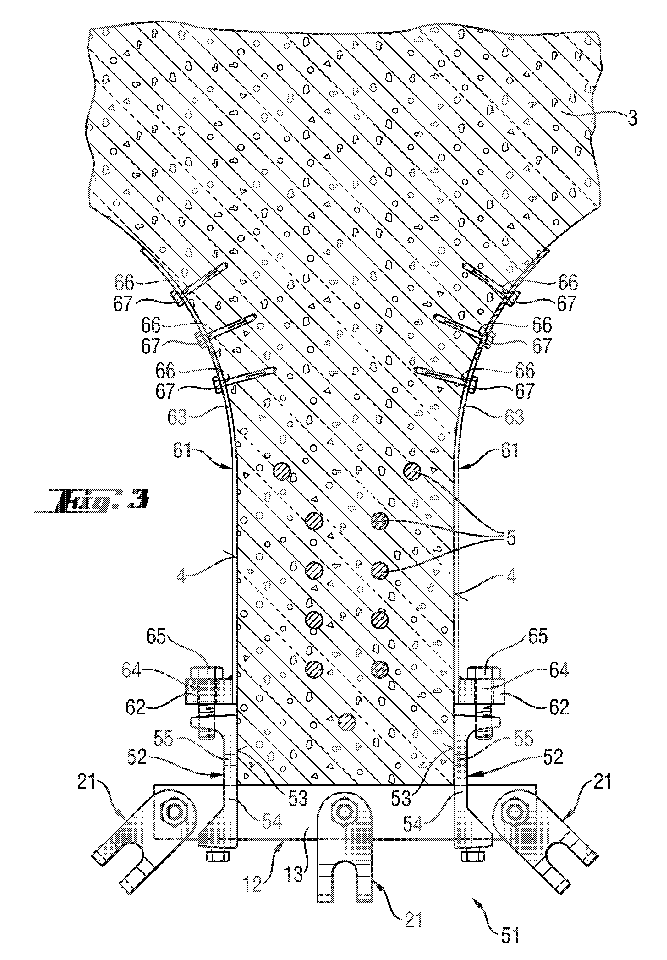

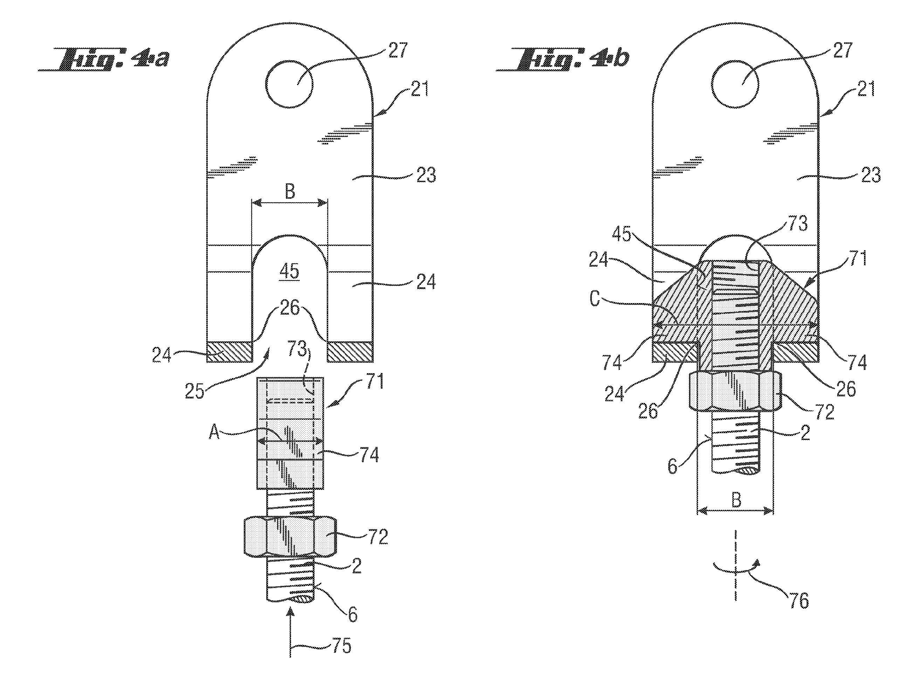

In Fig. 1 und Fig. 2 ist eine erfindungsgemässe Anbindevorrichtung 11 dargestellt, die an einem Stahlträger 1 zur Anordnung von drei unterschiedlich verlaufenden Abspannmitteln (z. B. Abspannmittel 2 in Fig. 4a, 4b) für eine Abhängekonstruktion oder dergleichen festgelegt ist. Die Anbindevorrichtung 11 weist einen als Lagerelement 12 ausgebildeten Trägerabschnitt 13 auf, wobei der Trägerabschnitt 13 ein Abschnitt einer C-förmigen Montageschiene ist. An dem Trägerabschnitt 13 sind drei jeweils einander gegenüberliegende Durchführöffnungspaare 14 (Fig. 2) für ein Lagermittel 15 in Form eines Bolzens vorgesehen. Mittels des Lagermittels 15 sind die Anbindeelemente 21 an dem Trägerabschnitt 13 schwenkbar angeordnet. Die Anbindeelemente 21 weisen im Querschnitt jeweils eine U-förmige Ausgestaltung mit einen ersten Schenkel 22, einen dem ersten Schenkel 22 gegenüberliegenden zweiten Schenkel 23 sowie einen den ersten Schenkel 22 und den zweiten Schenkel 23 verbindenden Verbindungsabschnitt 24 auf, der bogenförmig mit linearen Abschnitten verläuft. An den freien Endbereichen des ersten Schenkels 22 und des zweiten Schenkels 23 ist jeweils ein Durchbruch 27 (Fig. 4a, 4b) vorgesehen. Die Anbindeelemente 21 weisen des Weiteren jeweils eine Aufnahme 25 für ein Festlegemittel 71 des Abspannmittels 2 auf, die als schlitzförmiger, von dem ersten Schenkel 22 über den Verbindungsabschnitt 24 zu dem zweiten Schenkel 23 verlaufender Durchbruch ausgebildet ist.

Die Anbindevorrichtung 11 umfasst weiter zwei Halteelemente 31 zum Halten des Trägerabschnitts 13 an dem Stahlträger 1. Jedes Halteelement 31 weist einen ersten Zwingenabschnitt 32, einen zweiten Zwingenabschnitt 33 sowie einen den ersten Zwingenabschnitt 32 und den zweiten Zwingenabschnitt 33 verbindenden Verbindungsabschnitt 34 zum Umgreifen eines Randes des Trägers auf. An dem ersten Zwingenabschnitt 32 ist eine Durchführöffnung 35 mit einem Innengewinde 36 für eine als Fixiermittel 37 ausgebildete Schraube vorgesehen, mit welcher die Anbindevorrichtung 11 an dem Träger fixiert wird. An dem zweiten Zwingenabschnitt 33 ist eine Durchführöffnung 38 für eine als Fixiermittel 39 ausgebildete Schienenmutter zur Fixierung des Trägerabschnitts 13 vorgesehen. Die Schraube sowie die Schienenmutter können werkseitig an dem Halteelement 31 oder auch erst auf der Baustelle am Halteelement 31 angeordnet werden.

An dem Verbindungsabschnitt 34 des Halteelementes 31 ist eine Durchführöffnung 40 für den als Lagerelement 12 ausgebildeten Trägerabschnitt 13 vorgesehen, so dass die Halteelemente 31 den Trägerabschnitt 13 in unterschiedlichen Abständen zueinander halten können. Die gesamte Anbindevorrichtung 11 kann vormontiert sein beziehungsweise vor der Montage aus den einzelnen Teilen zusammengefügt und als Ganzes an den Stahlträger 1 angeordnet werden. Die Halteelemente 31 werden derart auseinander geschoben, dass jeweils der erste Zwingenabschnitt 32 über den Rand des Stahlträgers 1 geführt werden kann. Anschliessend werden die Halteelemente 31 gegeneinander versetzt, bis diese am Rand des Stahlträgers 1 anstossen, womit die Anbindevorrichtung 11 provisorisch an dem Träger gehalten ist. Der Trägerabschnitt 13 wird ausgerichtet und mittels des Fixiermittels 39 am zweiten Zwingenabschnitt 33 an den Halteelementen 31 lösbar festgelegt. Mittels Verspannen der Fixiermittel 37 am ersten Zwingenabschnitt 32 wird die Anbindevorrichtung 11 lösbar an dem Stahlträger 1 fixiert.

Die in Fig. 3 dargestellte Anbindevorrichtung 51 ist an einem Betonträger 3 angeordnet und umfasst im Wesentlichen die gleichen Teile wie die Anbindevorrichtung 11. Die Halteelemente 52 der Anbindevorrichtung 51 sind seitenverkehrt zu den Halteelementen 31 der Anbindevorrichtung 11 ausgerichtet, so dass jeweils eine Anlagefläche 53 an der Aussenseite 4 des Betonträgers 3 anliegen kann. Des Weiteren weisen die Halteelemente 52 jeweils in deren Verbindungsabschnitt 54 eine zusätzliche Durchführöffnung 55 für ein Befestigungsmittel zur Schaffung einer direkten Befestigung (nicht dargestellt) des Halteelementes 52 an dem Betonträger 3 auf.

Des Weiteren weist die Anbindevorrichtung 51 zwei Haltebänder 61 mit jeweils einem ersten Befestigungsabschnitt 62 und einem zweiten Befestigungsabschnitt 63. Der erste Befestigungsabschnitt 62 ist im Wesentlichen senkrecht zu der von dem Halteband 61 gebildeten Ebene ausgerichtet und weist eine Durchführöffnung 64 für eine als Befestigungsmittel 65 ausgebildete Schraube auf, die in die Durchführöffnung am ersten Zwingenabschnitt des Halteelementes 52 eingreift. Der zweite Befestigungsabschnitt 63 des Haltebandes 61 weist drei Durchführöffnungen 66 für als Befestigungsmittel 67 ausgebildete Schrauben, welche in zuvor in den Betonträger 3 gesetzte Dübel eingreifen. Die Hauptbewehrung 5 wird durch kein Befestigungsmittel 67 beschädigt.

Gemäss den Figuren 4a und 4b weist das als Gewindestange ausgebildete Abspannmittel 2 ein Aussengewinde 6 auf, an welchem eine Kontermutter 72 und über die Fixieraufnahme 73 des Festlegemittels 71 dieses aufgeschraubt sind. Das Festlegemittel 71 umfasst zwei Hintergreifabschnitte 74 zum Hintergreifen der Ränder 26 der Aufnahme 25 des Anbindeelementes 21. Das Festlegemittel 71 weist eine erste Erstreckung A auf, die kleiner als die Breite B des Durchbruchs 45 der Aufnahme 25 des Anbindeelementes 21 ist. Das Festlegemittel 71 weist weiter eine zweite Erstreckung C auf, die grösser als die Breite B des Durchbruchs der Aufnahme 25 des Anbindeelementes 21 ist.

Das Festlegemittel 71 wird in der in Fig. 4a gezeigten ersten Stellung in Richtung des Pfeils 75 in die Aufnahme 25 des Anbindeelementes 21 eingeführt und durch Abdrehen des Festlegemittels 71 in Richtung des Pfeils 76 in die zweite, in Fig. 4b gezeigte Stellung gebracht, in welcher die Hintergreifabschnitte 74 die Ränder 26 hintergreifen.

## Patentansprüche

1. Anbindevorrichtung für Abspannmittel (2) an einem Träger (1; 3) einer Tragkonstruktion mit einem Lagerelement (12) und einem Anbindelement (21), wobei das Anbindeelement (21) einen ersten Schenkel (22) und einen zweiten Schenkel (23) sowie ein, den ersten Schenkel (22) und den zweiten Schenkel (23) verbindenden Verbindungsabschnitt (24) aufweist und in den freien Endbereichen des ersten Schenkels (22) und des zweiten Schenkels (23) Durchbrüche (27) für eine schwenkbare Anordnung des Anbindeelementes (21) an dem Lagerelement (12) über ein Lagermittel (15) aufweist, sowie eine Aufnahme (25) für ein Festlegemittel (71) des Abspannmittels (3) aufweist, **dadurch gekennzeichnet, dass** die Aufnahme (25) als ein schlitzförmiger, von dem ersten Schenkel (22) über den Verbindungsabschnitt (24) zu dem zweiten Schenkel (23) verlaufender Durchbruch ausgebildet ist.

2. Anbindevorrichtung nach Anspruch 1, **dadurch gekennzeichnet, dass** der Verbindungsabschnitt (24) des Anbindeelementes (21) bogenförmig den ersten Schenkel (22) und den zweiten Schenkel (23) verbindet.

3. Anbindevorrichtung nach Anspruch 1 oder 2, **dadurch gekennzeichnet, dass** der Verbindungsabschnitt (24) des Anbindeelementes (21) zumindest einen linear verlaufenden Abschnitt aufweist.

4. Anbindevorrichtung nach einem der Ansprüche 1 bis 3, **dadurch gekennzeichnet, dass** das Lagerelement (12) als Trägerabschnitt (13) ausgebildet ist, wobei optional mehrere Anbindeelemente (21) an dem Trägerabschnitt (13) für die Festlegung mehrerer Abspannmittel (3) an der Anbindevorrichtung (11; 51) vorgesehen sind.

5. Anbindevorrichtung nach einem der Ansprüche 1 bis 3, **dadurch gekennzeichnet, dass** die Anbindevorrichtung (11; 51) zumindest zwei Halteelemente (31; 52) für eine Anbindung des Lagerelementes (12) an dem Träger (1; 3) aufweist.

6. Anbindevorrichtung nach Anspruch 5, **dadurch gekennzeichnet, dass** das Halteelement (31; 52) einen ersten Zwingenabschnitt (32), einen dem ersten Zwingenabschnitt (32) gegenüberliegend angeordneten zweiten Zwingenabschnitt (33) sowie einen die beiden Zwingenabschnitte (32, 33) verbindenden Verbindungsabschnitt (34) zum Umgreifen eines Randes des Trägers (1; 3) aufweist, wobei zumindest eine Durchführöffnung (35, 40) für ein Fixiermittel (37, 39) an zumindest einem der Zwingenabschnitte (32, 33) vorgesehen ist.

7. Anbindevorrichtung nach Anspruch 5 oder 6, **dadurch gekennzeichnet, dass** der Verbindungsabschnitt (34) des Halteelementes (31; 52) eine Durchführöffnung (40) zum Durchführen des Lagerelementes (12) und optional eine weitere Durchführöffnung (55) für ein Befestigungsmittel aufweist.

8. Anbindevorrichtung nach einem der Ansprüche 1 bis 7, **dadurch gekennzeichnet, dass** ein Halteband (61) mit zumindest einem Befestigungsabschnitt (62, 63) zur Festlegung des Lagerelementes (12) und/oder des Halteelementes (31; 52) an dem Träger (3) vorgesehen ist, wobei der zumindest eine Befestigungsabschnitt (62, 63) zumindest eine Durchführöffnung (64, 66) für ein Befestigungsmittel (65, 67) aufweist.

9. Anbindevorrichtung nach einem der Ansprüche 1 bis 8, **dadurch gekennzeichnet, dass** das Festlegemittel (71) des Abspannmittels (2) eine Fixieraufnahme (73) zur Anordnung des Abspannmittels (2) und zumindest zwei Hintergreifabschnitte (74) zum Hintergreifen von Rändern (26) des schlitzförmigen Durchbruchs der Aufnahme (25) des Anbindeelementes (21) aufweist.

10. Anbindevorrichtung nach einem der Ansprüche 1 bis 9, **dadurch gekennzeichnet, dass** das Festlegemittel (71) des Abspannmittels (2) eine erste Erstreckung (A) aufweist, die kleiner als die Breite (B) des Durchbruchs der Aufnahme (25) des Anbindeelementes (21) ist, zum Einführen des Festlegemittels (71) in den Durchbruchs der Aufnahme (25) des Anbindeelementes (21) in einer ersten Stellung und eine, im Wesentlichen senkrecht zur ersten Erstreckung (A) verlaufende zweite Erstreckung (C) aufweist, die grösser als die Breite (B) des Durchbruchs der Aufnahme (25) des Anbindeelementes (21) ist, zum Hintergreifen der Ränder (26) des schlitzförmigen Durchbruchs der Aufnahme (25) des Anbindeelementes (21) in einer zweiten Stellung.
